# EUROPÄISCHE PATENTSCHRIFT

(11) **EP 3 182 235 B1**
(45) Veröffentlichungstag und Bekanntmachung des Hinweises auf die Patenterteilung: **27.03.2019**
(21) Anmeldenummer: 15201064.1
(22) Anmeldetag: 18.12.2015
(51) Int. Cl.: G05B 19/05, G06F 9/54, H04L 29/06

(54) **VERFAHREN UND INDUSTRIELLE STEUERUNG ZUM AUFRUF EINER FUNKTION EINES STEUERUNGSPROGRAMMS MITTELS EINES OPC UA AUFRUFS**
METHOD AND INDUSTRIAL CONTROL FOR CALLING A FUNCTION OF A CONTROL PROGRAM BY MEANS OF AN OPC UA CALL
PROCEDE ET COMMANDE INDUSTRIELLE DESTINES A INTERROGER UNE FONCTION D'UN PROGRAMME DE COMMANDE A L'AIDE D'UNE INTERROGATION OPC UA

(43) Veröffentlichungstag der Anmeldung: 21.06.2017
(73) Patentinhaber: Siemens Aktiengesellschaft, 80333 München (DE)
(72) Erfinder: Pille, Jean, 92263 Ebermannsdorf (DE)

(56) Entgegenhaltungen:
- WO-A1-2013/155421
- DE-A1-102007 062 985
- DE-A1-102007 062 986
- US-A1- 2005 203 648

## Beschreibung

Die Erfindung betrifft ein Verfahren zum Aufruf einer Funktion eines industriellen Steuerungsprogramms gemäß dem Oberbegriff des Patentanspruchs 1, und eine industrielle Steuerung mit einem OPC UA Server gemäß dem Oberbegriff des Patentanspruchs 7.

OPC UA (OPC Unified Architecture) ist ein industrielles Standardprotokoll der OPC-Foundation zur Hersteller-unabhängigen Kommunikation für den Austausch von Maschinendaten, insbesondere in der Automatisierungstechnik. Bei dem OPC UA Standard liegt ursprünglich der Fokus nicht auf der Steuerung einer Industrieanlage, sondern vielmehr auf dem standardisierten Informationsaustausch, insbesondere zwischen Geräten unterschiedlicher Hersteller.

Es ist bereits bekannt, industrielle Steuerungen, beispielsweise Speicherprogrammierbare Steuerungen (SPS), mit einem OPC UA Server zu versehen, der dann mit einem OPC UA Client kommunizieren kann, wobei der OPC UA Client beispielsweise Bestandteil eines Bedien- und Beobachtungsgerätes (HMI-Human Machine Interface) oder dergleichen sein kann.

Auf einem OPC UA Server ist es dann möglich, mittels einer Methode "CallService" eine vom Server vorgegebene Methode aufzurufen. Im Server wird durch ein internes Methodenobjekt bestimmt, welche Abläufe durch den Methodenaufruf intern gestartet werden, und welche Daten dabei manipuliert werden. Die Implementierung von Methoden auf einem Server in einer industriellen Steuerung kann unterschiedlich erfolgen, da Methodenobjekte Teil des OPC UA Datenmodells sind.

Ein Beispiel ist der Start bzw. der Stopp eines industriellen Steuerungsprogramms, wozu es in einem Systemprogramm der industriellen Steuerung regelmäßig einen Befehl "RUN/STOP" gibt. Dieser Befehl "RUN/STOP" kann von einem OPC UA Server, der auf derselben industriellen Steuerung abläuft, ausgelöst werden. Zur Fernsteuerung der industriellen Steuerung kann durch einen OPC UA Client ein entsprechender Befehl an den OPC UA Server der industriellen Steuerung gesendet werden, womit die entsprechende Funktionalität ausgelöst wird. Das entsprechende Methodenobjekt wird dann vom Server an der OPC UA Schnittstelle angeboten und kann durch beliebige Clients mittels der Methode "CallService" ausgeführt werden. Häufig wird ein Editor verwendet, mit dem die entsprechende Funktion und die entsprechenden Parameter festgelegt werden. Diese Funktion wird dann durch eine Methode mit der Bezeichnung "OPC UA Method" innerhalb des OPC UA Servers dargestellt.

Während der Aufruf dieser Methoden im Kontext des OPC UA Kommunikationsprotokolls allgemein problemlos ist, liegt eine Herausforderung darin, bei der Realisierung den "Ausführungskontext" einer Methode zu bestimmen. Dies ist insbesondere bei industriellen Steuerungen wichtig, da zwischen den meist zyklisch ablaufenden Anwenderprogrammen und den zugrundeliegenden Kommunikationsdiensten unterschieden wird. Während beispielsweise Befehle wie Start und Stopp (RUN/STOP) jederzeit aufgerufen werden können und dann auch unverzüglich umgesetzt werden sollen, ist es bei industriellen Steuerungen häufig wichtig, dass der Aufruf von Funktionen nur zu bestimmten Zuständen oder bei bestimmten Zuständen des jeweiligen Ausführungszyklus geschehen darf. Bei den bisherigen Anwendungsszenarien werden Methoden, die durch einen Kommunikations-Client (OPC UA Client) von "außen" angestoßen werden, asynchron zum Anwenderprogramm abgearbeitet. Eine Synchronisation zwischen dem Anwenderprogramm bzw. dem industriellen Steuerungsprogramm und der OPC UA Methode, welche im Hintergrund ausgeführt wird, ist nicht möglich.

Die Druckschrift US 2005/0203648 A1 - Martin "System and method for accessing PLC data on demand" beschreibt ein Verfahren zum Zugriff auf lokale Daten einer speicherprogrammierbaren Steuerung, wobei eine zusätzliche Software auf der speicherprogrammierbaren Steuerung gespeichert wird. Diese zusätzliche Software kann von einer externen Einheit, einem sog. Client, dazu verwendet werden, um asynchron zum zyklischen Automatisierungsprogramm der speicherprogrammierbaren Steuerung Aktionen auf dieser speicherprogrammierbaren Steuerung auszulösen, insbesondere um Daten von der speicherprogrammierbaren Steuerung abzurufen.

Die Druckschrift DE 10 2007 062 986 A1 - Mahnke "Verfahren und Einrichtung zur Client-Server-Kommunikation gemäß dem Standardprotokoll OPC UA" befasst sich mit dem Problem des Zugriffs eines OPC UA Clients auf einer Mehrzahl von OPC UA Servern, wobei vorgeschlagen wird, die Zugriffe auf die OPC UA Server durch einen vorgeschalteten "aggregating OPC UA-Server" zu verwalten und zu koordinieren. Nach Art eines Proxy führt der aggregating OPC UA Server dann asynchrone Zugriffe auf die unterlagerten OPC UA Server, beispielsweise speicherprogrammierbare Steuerungen, durch.

Es ist daher eine Aufgabe der vorliegenden Erfindung, den Ausführungszeitpunkt einer mittels eines OPC UA Clients aufgerufenen Funktion mit dem Ablauf eines industriellen Steuerungsprogramms zu koordinieren.

Es ist ein zentraler Gedanke der erfindungsgemäßen Lösung dieser Aufgabe, dass ein Anwender die Möglichkeit erhält, durch ein Engineering-Tool eine auszuführende Funktion, beispielsweise als Funktionsbaustein (FB), zu definieren. Für diesen Funktionsbaustein oder allgemein für die auszuführende Funktion wird im OPC UA Server ein entsprechendes Methodenobjekt erzeugt, welches für die OPC UA Clients sichtbar ist. Dieses Methodenobjekt soll im Folgenden in Anlehnung an die bei OPC UA übliche Nomenklatur "OPC UA Method" genannt werden. Neben der vom Anwender definierten Funktion bzw. neben dem definierten Funktionsbaustein ist weiterhin eine spezielle Systemfunktion (Systemfunktionsbaustein, Systembaustein) vorgesehen. An dieser Systemfunktion kann eine entsprechende Referenz auf die zuvor definierte Funktion bzw. auf den zuvor erstellten Funktionsbaustein angegeben werden. Ein OPC UA Client kann dann über das Methodenobjekt (OPC UA Method) die entsprechende Methode am OPC UA Server aufrufen. Die Methode wird aber nicht asynchron zum Anwenderprogramm ausgeführt, sondern die Ausführung der Methode erfolgt erst innerhalb des Aufrufs des Systemfunktionsbausteins im Anwenderprogramm. Dabei wird über eine Identifizierung (ID) die Beziehung zwischen dem Funktionsbaustein bzw. der definierten Funktion und dem zugehörigen Methodenobjekt hergestellt. Der Anwender kann den Systembaustein bzw. den Aufruf des Systembausteins an einer beliebigen Stelle in seinem Anwenderprogramm platzieren. Damit ist der Ausführungskontext, also der Zeitpunkt des Aufrufs des Systembausteins und damit des Aufrufs der definierten Funktion bzw. des definierten Funktionsbausteins, festgelegt.

Die Aufgabe wird insbesondere durch ein Verfahren gemäß dem Patentanspruch 1 und durch eine industrielle Steuerung gemäß Patentanspruch 7 gelöst.

Dabei wird ein Verfahren zum Aufruf einer Funktion eines Steuerungsprogramms einer industriellen Steuerung vorgeschlagen, wobei die industrielle Steuerung einen OPC UA Server aufweist, wobei die industrielle Steuerung mittels des OPC UA Kommunikationsprotokolls mit einem OPC UA Client kommuniziert, und wobei die Funktion durch einen OPC UA Aufruf des OPC UA Clients aufgerufen wird. Dabei wird zum Aufruf der Funktion in einem ersten Schritt ein darauf gerichteter OPC UA Aufruf von dem OPC UA Client an den OPC UA Server der industriellen Steuerung gesendet, in einem zweiten Schritt wird der OPC UA Aufruf durch ein Systemprogramm der industriellen Steuerung gespeichert, in einem dritten Schritt wird an einer definierten Stelle eines industriellen Steuerungsprogramms eine Systemfunktion des Systemprogramms aufgerufen, wobei die Systemfunktion überprüft, ob ein OPC UA Aufruf gespeichert ist, und in einem vierten Schritt wird bei Vorliegen eines OPC UA Aufrufs die mit diesem Aufruf verknüpfte Funktion des Steuerungsprogramms aufgerufen, und anderenfalls wird das industrielle Steuerungsprogramm ohne Verzweigung zu der Funktion fortgesetzt. Durch ein solches Verfahren ist es möglich, mittels des OPC UA Aufrufs eine definierte Funktion bzw. Funktionsbaustein an einer zuvor festgelegten Stelle des Anwenderprogramms aufzurufen.

Die Aufgabe wird außerdem durch eine industrielle Steuerung mit einem OPC UA Server gelöst, wobei die industrielle Steuerung zum Ablauf eines industriellen Steuerungsprogramms eingerichtet ist, wobei die industrielle Steuerung zur Kommunikation mit einem OPC UA Client mittels des OPC UA Kommunikationsprotokolls eingerichtet ist, und wobei eine Funktion des industriellen Steuerungsprogramms mittels eines OPC UA Aufrufs aufrufbar ist. Dabei ist der OPC UA Server zum Empfang eines auf den Aufruf der Funktion gerichteten OPC UA Aufrufs von dem OPC UA Client eingerichtet, wobei die industrielle Steuerung zur Speicherung des OPC UA Aufrufs mittels eines Systemprogramms der industriellen Steuerung eingerichtet ist, wobei die industrielle Steuerung derart eingerichtet ist, wobei an einer definierten Stelle des industriellen Steuerungsprogramms eine Systemfunktion des Systemprogramms aufgerufen wird, wobei die Systemfunktion dazu eingerichtet ist, auf das Vorliegen eines OPC UA Aufrufs zu prüfen, und wobei die industrielle Steuerung derart eingerichtet ist, dass bei Vorliegen eines OPC UA Aufrufs bei dieser Prüfung die mit diesem Aufruf verknüpfte Funktion des Steuerungsprogramms aufgerufen wird, und anderenfalls nicht. Durch diese industrielle Steuerung werden die bereits anhand des Verfahrens diskutierten Vorteile realisiert.

Vorteilhafte Ausgestaltungen des erfindungsgemäßen Verfahrens sind in den abhängigen Patentansprüchen angegeben. Die dabei angegebenen Merkmale und deren Vorteile gelten sinngemäß auch für die industrielle Steuerung. Die vorteilhaften Varianten können sowohl einzeln, als auch in Kombination miteinander realisiert sein.

Vorteilhaft sind der OPC UA Aufruf und die damit aufzurufende Funktion bzw. der damit aufzurufende Funktionsbaustein mittels einer identischen Identifikation (ID), insbesondere einer Identifikationsnummer oder eines Alias-Namens, miteinander verknüpft. Damit ist es möglich, mehrere verschiedene OPC UA Aufrufe mit mehreren verschiedenen aufzurufenden Funktionen zu verknüpfen, wobei eine einheitliche Identifikation die Verwaltung der Aufrufe und der aufzurufenden Funktionen in einem Engineering-System vereinfacht.

Vorteilhaft wird zum Aufruf der Systemfunktion des Systemprogramms ein Befehl in einer Programmiersprache des industriellen Steuerungsprogramms definiert und abgearbeitet. Somit kann bei Erreichen dieses speziellen Befehls beim Abarbeiten des industriellen Steuerungsprogramms in die Systemfunktion verzweigt werden, wo dann geprüft wird, ob ein OPC UA Aufruf für die Identifikationsnummer, die als Argument des Befehls übertragen werden kann, vorliegt. Dieser Rückgabewert kann beispielsweise ein Flag sein, wobei im Rahmen des industriellen Steuerungsprogramms die Funktion durch dieses Flag flankengesteuert ausgeführt wird. Erkennt das Steuerungsprogramm beispielweise eine positive Flanke, wird die vorher festgelegte Funktion ausgeführt, andernfalls der Aufruf übersprungen.

In einer weiteren vorteilhaften Variante kann nach Aufruf der Systemfunktion oder alternativ nach Abarbeiten der aufgerufenen Funktion bzw. des aufgerufenen Funktionsbausteins eine Quittierungsnachricht an den OPC UA Client versendet werden. Gleichzeitig kann nach einem erfolgreichen Aufruf der Systemfunktion oder nach einem erfolgreichen Aufruf der definierten Funktion bzw. des definierten Funktionsbausteins der zuvor gespeicherte OPC UA Aufruf deaktiviert oder gelöscht werden. Somit wird eine versehentliche doppelte Abarbeitung der Funktion vermieden.

Ein Ausführungsbeispiel des erfindungsgemäßen Verfahrens wird nachfolgend anhand einer Zeichnung erläutert. Das Ausführungsbeispiel dient gleichzeitig der Erläuterung einer erfindungsgemäßen industriellen Steuerung.

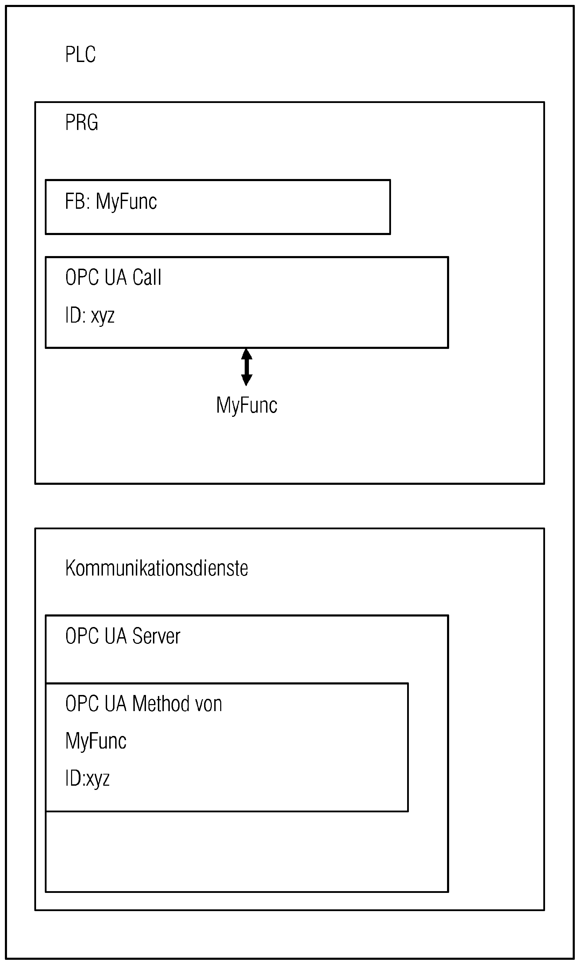

Dabei zeigt die einzige Figur in schematischer Darstellung wesentliche Funktionsblöcke eines industriellen Steuerungsprogramms (industrielles Anwenderprogramm) und der Kommunikationsdienste des OPC UA Servers einer industriellen Steuerung.

Die Figur zeigt schematisch einige Softwarekomponenten einer industriellen Steuerung PLC. Dabei ist ein industrielles Steuerungsprogramm PRG gezeigt, welches eine Anwendung darstellt, die zur Steuerung oder Kontrolle eines industriellen Prozesses oder einer industriellen Fertigung dient. Ein solches industrielles Steuerungsprogramm PRG ist üblicherweise in einer Programmiersprache für industrielle Steuerungen verfasst, beispielsweise Kopplungsplan (KOP), Funktionsplan (FUP), Anweisungsliste (AWL), Structured Control Language (SCL), oder dergleichen. Neben dem Anwendungsprogramm ist regelmäßig auch ein Betriebssystem und eine sogenannte Firmware vorhanden (beides nicht dargestellt). Als eine Erweiterung des Betriebssystems sind auf der industriellen Steuerung PLC auch Kommunikationsdienste installiert, hier ein sogenannter OPC UA Server. Dieser dient zum Datenaustausch mit einem OPC UA Client (nicht dargestellt).

Im Folgenden soll davon ausgegangen werden, dass das industrielle Steuerungsprogramm PRG einen Funktionsbaustein FB mit dem Namen "MyFunc" umfasst, wobei dieser Funktionsbaustein FB nur dann aufgerufen bzw. abgearbeitet werden soll, wenn eine entsprechende Anforderung eines externen Gerätes, eines sogenannten OPC UA Clients, vorliegt. Die Abarbeitung dieses Funktionsbausteins FB soll jedoch nicht spontan erfolgen, das heißt nicht dann, wenn die entsprechende Anforderung in Gestalt eines sogenannten OPC UA Calls vom OPC UA Client eingeht, sondern erst später, wenn die Abarbeitung des industriellen Steuerungsprogramms PRG eine wohl definierte Stelle erreicht hat.

Zu diesem Zweck wird dem OPC UA Server der Kommunikationsdienste ein Methodenobjekt (OPC UA Method) zum Aufruf des Funktionsbausteins FB "MyFunc" definiert. Dieses Methodenobjekt kann mit einer eindeutigen Identifikationsnummer ID (hier: xyz) verknüpft sein.

Das industrielle Steuerungsprogramm PRG umfasst an derjenigen Programmstelle, an der fallweise, nämlich je nach Anforderung des OPC UA Clients, in den Funktionsbaustein FB "MyFunc" verzweigt werden soll, einen für diesen Zweck neu definierten Befehl OPC UA Call. Dieser Befehl OPC UA Call kann als Befehlsargument die eindeutige Identifizierung ID "xyz" enthalten, was dem Zweck dient, verschiedene Funktionsbausteine mit verschiedenen OPC UA Aufrufen zu korrelieren.

Zum Aufruf der Funktion bzw. des Funktionsbausteins FB "MyFunc" kann der OPC UA Client über das Methodenobjekt OPC UA Method die entsprechende Methode am OPC UA Server aufrufen, wobei dieser Aufruf (OPC UA Call) die entsprechende Identifizierung ID "xyz" enthalten kann. Diese Anforderung wird im Methodenobjekt von "MyFunc" des Systemfunktionsbausteins, der durch das Anwendungsprogramm mit dem Befehl "OPC UA Call" aufgerufen wird, gespeichert. Sobald das industrielle Steuerungsprogramm PRG (Anwendungsprogramm) den Befehl "OPC UA Call" abarbeitet, wird in den entsprechenden Systemfunktionsbausteinen verzweigt, wobei innerhalb des Systemfunktionsbausteins entschieden wird, ob eine entsprechende Anforderung zur Ausführung des Funktionsbausteins FB "MyFunc" vorliegt. Als Rückgabewert bekommt das industrielle Steuerungsprogramm PRG dann ein Flag oder einer Information mitgeteilt, die beispielsweise "true" bei Vorliegen einer Anforderung bedeutet, und "false" in allen anderen Fällen. Anhand dieser Information kann dann das industrielle Steuerungsprogramm PRG vorzugsweise flankengesteuert in den Funktionsbaustein FB "MyFunc" verzweigen, oder auch nicht.

Der Vorteil der Lösung liegt darin, dass mittels des OPC UA Servers Bestandteile des industriellen Steuerungsprogramms PRG (Anwenderprogramm) gezielt aufgerufen werden können. Damit erfolgt die Ausführung der Methode nicht mehr zu einem unbestimmten Zeitpunkt asynchron zum industriellen Steuerungsprogramm, sondern zu einem vom Anwender selbst definierten Zeitpunkt bzw. Ablaufpunkt des industriellen Steuerungsprogramms PRG. Wenn also durch die Methode Prozessdaten, welche auch im industriellen Steuerungsprogramm PRG manipuliert werden, beeinflusst werden, so ist die Datenkonsistenz von diesen Prozessdaten bei entsprechender Programmierung gewährleistet. Zudem kann mittels des Verfahrens ein Anwender eine OPC UA Methode mit der gleichen Engineering-Sicht erstellen, mit welcher auch das restliche industrielle Steuerungsprogramm PRG erstellt wird.

Ein weiterer Vorteil ist dadurch begründet, dass bei der Definition der OPC UA Methode auch Input/Output-Parameter festgelegt werden können. Beim Aufruf der OPC UA Methode werden dann vom Client die Input-Parameter übergeben, und umgekehrt werden in der Antwort bzw. dem Rückgabewert die Output-Parameter übermittelt, d.h., es ist möglich, konsistente Prozessdaten zu liefern bzw. konsistente Eingangsdaten zu lesen. Dadurch ist die Stelle im Programmablauf und damit der Zeitpunkt, zu dem der Datenaustausch zwischen dem Client und dem Automatisierungsprogramm bzw. der aufgerufenen Funktion stattfindet, jeweils klar festgelegt.

## Patentansprüche

1. Verfahren zum Aufruf einer Funktion (FB) eines Steuerungsprogramms (PRG) einer industriellen Steuerung (PLC),
wobei die industrielle Steuerung (PLC) einen OPC UA Server aufweist,
wobei die industrielle Steuerung (PLC) mittels des OPC UA Kommunikationsprotokolls mit einem OPC UA Client kommuniziert, und
wobei die Funktion (FB) durch einen OPC UA Aufruf des OPC UA Clients aufgerufen wird,
**dadurch gekennzeichnet,**
**dass** zum Aufruf der Funktion (FB)
- in einem ersten Schritt ein darauf gerichteter OPC UA Aufruf von dem OPC UA Client an den OPC UA Server der industriellen Steuerung (PLC) gesendet wird,
- in einem zweiten Schritt der OPC UA Aufruf durch ein Systemprogramm der industriellen Steuerung (PLC) gespeichert wird,
- in einem dritten Schritt an einer definierten Stelle eines industriellen Steuerungsprogramms (PRG) eine Systemfunktion (OPC UA Call) des Systemprogramms (PRG) aufgerufen wird, wobei die Systemfunktion (OPC UA Call) überprüft, ob ein OPC UA Aufruf gespeichert ist, und
- in einem vierten Schritt bei Vorliegen eines OPC UA Aufrufs die mit diesem Aufruf verknüpfte Funktion (FB) des Steuerungsprogramms (PRG) aufgerufen wird, und
anderenfalls das industrielle Steuerungsprogramm (PRG) ohne Verzweigung zu der Funktion (FB) fortgesetzt wird.

2. Verfahren nach Patentanspruch 1,
**dadurch gekennzeichnet,**
**dass** der OPC UA Aufruf und die damit aufzurufende Funktion (FB) mittels einer identischen Identifikation (ID), insbesondere einer Identifikationsnummer oder eines Aliasnamens, verknüpft werden.

3. Verfahren nach einem der vorhergehenden Patentansprüche,
**dadurch gekennzeichnet,**
**dass** zum Aufruf der Systemfunktion (OPC UA Call) des Systemprogramms ein Befehl in einer Programmiersprache des industriellen Steuerungsprogramms (PRG) definiert und abgearbeitet wird.

4. Verfahren nach Patentanspruch 3,
**dadurch gekennzeichnet,**
**dass** der Befehl einen Rückgabewert aufweist,
wobei mittels des Rückgabewertes durch das Steuerungsprogramm (PRG) entschieden wird, ob die Funktion (FB) aufgerufen wird oder nicht.

5. Verfahren nach einem der vorhergehenden Patentansprüche,
**dadurch gekennzeichnet,**
**dass** nach Aufruf der Systemfunktion (OPC UA Call) eine Quittierungsnachricht an den OPC UA Client versendet wird.

6. Verfahren nach einem der vorhergehenden Patentansprüche,
**dadurch gekennzeichnet,**
**dass** nach Aufruf der Systemfunktion (OPC UA Call) der gespeicherte OPC UA Aufruf deaktiviert oder gelöscht wird.

7. Industrielle Steuerung (PLC) mit einem OPC UA Server, wobei die industrielle Steuerung (PLC) zum Ablauf eines industriellen Steuerungsprogramms (PRG) eingerichtet ist,
wobei die industrielle Steuerung (PLC) zur Kommunikation mit einem OPC UA Client mittels des OPC UA Kommunikationsprotokolls eingerichtet ist, und
wobei eine Funktion (FB) des industriellen Steuerungsprogramms (PRG) mittels eines OPC UA Aufrufs aufrufbar ist, **dadurch gekennzeichnet,**
**dass** der OPC UA Server zum Empfang eines auf den Aufruf der Funktion (FB) gerichteten OPC UA Aufrufs von dem OPC UA Client eingerichtet ist,
**dass** die industrielle Steuerung (PLC) zur Speicherung des OPC UA Aufrufs mittels eines Systemprogramms der industriellen Steuerung (PLC) eingerichtet ist,
**dass** die industrielle Steuerung (PLC) derart eingerichtet ist, dass an einer definierten Stelle des industriellen Steuerungsprogramms (PRG) eine Systemfunktion (OPC UA Call) des Systemprogramms aufgerufen wird, wobei die Systemfunktion (OPC UA Call) dazu eingerichtet ist, auf das Vorliegen eines OPC UA Aufrufs zu prüfen, und
**dass** die industrielle Steuerung (PLC) derart eingerichtet ist, dass bei Vorliegen eines OPC UA Aufrufs bei dieser Prüfung die mit diesem Aufruf verknüpfte Funktion (FB) des Steuerungsprogramms (PRG) aufgerufen wird, und anderenfalls nicht.

## Claims

1. Method for calling a function (FB) of a control program (PRG) of an industrial controller (PLC),
wherein the industrial controller (PLC) has an OPC UA server, wherein the industrial controller (PLC) communicates with an OPC UA client by means of the OPC UA communication protocol, and
wherein the function (FB) is called by means of an OPC UA call from the OPC UA client,
**characterized**
**in that**, in order to call the function (FB),
- an OPC UA call directed thereto is transmitted from the OPC UA client to the OPC UA server of the industrial controller (PLC) in a first step,
- the OPC UA call is stored by a system program of the industrial controller (PLC) in a second step,
- a system function (OPC UA Call) of the system program (PRG) is called at a defined point of an industrial control program (PRG) in a third step, wherein the system function (OPC UA Call) checks whether an OPC UA call has been stored, and
- if an OPC UA call is present, the function (FB) of the control program (PRG) linked to this call is called in a fourth step, and
otherwise the industrial control program (PRG) is continued without branching to the function (FB).

2. Method according to Patent Claim 1,
**characterized**
**in that** the OPC UA call and the function (FB) to be called therewith are linked by means of an identical identification (ID), in particular an identification number or an alias.

3. Method according to one of the preceding patent claims,
**characterized**
**in that**, in order to call the system function (OPC UA Call) of the system program, an instruction is defined and executed in a programming language of the industrial control program (PRG) .

4. Method according to Patent Claim 3,
**characterized**
**in that** the instruction has a return value,
wherein the control program (PRG) uses the return value to decide whether or not the function (FB) is called.

5. Method according to one of the preceding patent claims,
**characterized**
**in that** an acknowledgement message is transmitted to the OPC UA client after the system function (OPC UA Call) has been called.

6. Method according to one of the preceding patent claims,
**characterized**
**in that** the stored OPC UA call is deactivated or deleted after the system function (OPC UA Call) has been called.

7. Industrial controller (PLC) having an OPC UA server, wherein the industrial controller (PLC) is set up to run an industrial control program (PRG),
wherein the industrial controller (PLC) is set up to communicate with an OPC UA client by means of the OPC UA communication protocol, and
wherein a function (FB) of the industrial control program (PRG) can be called by means of an OPC UA call,
**characterized**
**in that** the OPC UA server is set up to receive an OPC UA call directed to the call of the function (FB) from the OPC UA client,
**in that** the industrial controller (PLC) is set up to store the OPC UA call by means of a system program of the industrial controller (PLC),
**in that** the industrial controller (PLC) is set up in such a manner that a system function (OPC UA Call) of the system program is called at a defined point of the industrial control program (PRG), wherein the system function (OPC UA Call) is set up to check for the presence of an OPC UA call, and
**in that** the industrial controller (PLC) is set up in such a manner that, if an OPC UA call is present during this check, the function (FB) of the control program (PRG) linked to this call is called, and otherwise is not called.

## Revendications

1. Procédé d'appel d'une fonction (FB) d'un programme (PRG) de commande d'un automate (PLC) industriel, l'automate (PLC) industriel ayant un serveur OPC UA,
dans lequel l'automate (PLC) industriel communique avec un client OPC UA au moyen du protocole de communication OPC UA et dans lequel on appelle la fonction (FB) par un appel OPC UA du client OPC UA,
**caractérisé**
**en ce que**, pour appeler la fonction (FB),
- dans un premier stade, on envoie un appel OPC UA dirigé du client OPC UA au serveur OPC UA de l'automate (PLC) industriel,
- dans un deuxième stade, on met l'appel OPC UA en mémoire par un programme de système de l'automate (PLC) industriel,
- dans un troisième stade, on appelle, à un point défini d'un programme (PRG) de commande industriel, une fonction (OPC UA Call) de système du programme (PRG) de système, la fonction (OPC UA Call) de système contrôlant si un appel OPC UA est mis en mémoire et
- dans un quatrième stade, en présence d'un appel OPC UA, on appelle la fonction (FB), combinée à cet appel, du programme (PRG) de commande et
- sinon, on continue le programme (PRG) de commande industriel sans bifurquer sur la fonction (FB).

2. Procédé suivant la revendication 1,
**caractérisé**
**en ce que** l'on combine l'appel OPC UA et la fonction (FB) ainsi appelée au moyen d'une même identification (ID), notamment d'un numéro d'identification ou d'une dénomination autre.

3. Procédé suivant l'une des revendications précédentes,
**caractérisé**
**en ce que**, pour appeler la fonction (OPC UA Call) de système du programme de système, on définit et on élabore une instruction dans un langage de programmation du programme (PRC) de commande industriel.

4. Procédé suivant la revendication 3,
**caractérisé**
**en ce que** l'instruction a une valeur de restitution, dans lequel il est décidé, par le programme (PRG) de commande, au moyen de la valeur de restitution, si la fonction (FB) est appelée ou non.

5. Procédé suivant l'une des revendications précédentes,
**caractérisé**
**en ce que**, après l'appel de la fonction (OPC UA Call) de système, un message d'accusé de réception est envoyé au client OPC UA.

6. Procédé suivant l'une des revendications précédentes,
**caractérisé**
**en ce que**, après l'appel de la fonction (OPC UA Call) de système, on désactive ou on efface l'appel OPC UA mis en mémoire.

7. Automate (PLC) industriel ayant un serveur OPC UA, l'automate (PLC) industriel étant conçu pour le déroulement d'un programme (PRG) de commande industriel,
dans lequel l'automate (PLC) industriel est conçu pour communiquer avec un client OPC UA au moyen du protocole de communication OPC UA et
dans lequel une fonction (FB) du programme (PRG) de commande industriel peut être appelée au moyen d'un appel OPC UA,
**caractérisé**
**en ce que** le serveur OPC U est conçu pour recevoir, du client OPC UA, un appel OPC UA visant l'appel de la fonction (FB), en ce que l'automate (PLC) industriel est conçu pour mettre l'appel OPC UA en mémoire au moyen d'un programme de système de l'automate (PLC) industriel,
**en ce que** l'automate (PLC) industriel est conçu de manière à appeler, à un point défini du programme (PRG) de commande industriel, une fonction (OPC UA Call) de système du programme de système, la fonction (OPC UA Call) étant conçue pour contrôler la présence d'un appel OPC UA et
**en ce que** l'automate (PLC) industriel est conçu pour, en présence d'un appel OPC UA lors de ce contrôle, appeler la fonction (FB) combinée à cet appel du programme (PRG) de commande et, sinon, pour ne pas le faire.
